# EUROPEAN PATENT APPLICATION

(11) **EP 1 063 833 A2**
(43) Date of publication of application: **27.12.2000**
(21) Application number: 99306745.3
(22) Date of filing: 25.08.1999
(51) Int. Cl.: H04L 29/06, H04L 9/00, H04L 12/22

(54) **System for filtering data utilizing electronic watermark**

(30) Priority: 23.06.1999 JP 17628999
(71) Applicant: Hitachi, Ltd., Chiyoda-ku, Tokyo 101 (JP)
(72) Inventor: Nagayama, Takashi, Ichikawa-shi (JP); Ogawa, Tohru, Midori-ku, Yokohama-shi (JP)
(74) Representative: Calderbank, Thomas Roger

(57) **Abstract**

A filtering device (60) for connecting an internal network (10) with an external network (20) has a determination unit (62) for determining whether a data transfer is enabled or disabled. When data is transferred between the two networks (10, 20), the determination unit (62) determines whether or not the data transfer satisfies conditions defined by the contents of an electronic watermark (64) included in the data. The data transfer is enabled when it satisfies the conditions.

## Description

The present invention relates generally to data security, and more particularly to a security system for filtering data to be transferred to a system connected to an open network.

Conventionally, a firewall device has been used to limit accesses to an open external network, and information has been encrypted before transmitting the information to the open external network.

The firewall device is installed at a relay point between an internal network and an external network for controlling accesses to the networks with a combination of a source address and a destination address. An encryption function allows only users having a decryption key to decrypt data and thus reference the data, as used in JP-A-11-025048 or the like.

In the firewall device, since the access control basically relies on referencing source and destination addresses, a limitation to data access is imposed on a certain information transmission server inevitably in such a manner that all accesses are passed or blocked. This inflexible access control makes it difficult to conceal only a portion of data on the server against an external network. In addition, concealment of information through encryption requires decryption each time a user of an internal network, who is allowed to reference information therein, is to reference information. In this event, the user needs a decryption function, and also experiences complexity of informing a decryption key to a server. Moreover, once the user has decrypted data, anyone else can reference the decrypted data afterwards, so that the decrypted data is highly susceptible to leakage to the outside.

It is therefore an object of the present invention to protecting particular data from leaking from an internal network to the outside without preventing information from being opened to internal users.

According to a first aspect, the present invention provides a filtering device for connecting an internal network with an external network. The filtering device includes means operable when data is transferred between the networks for determining whether the data transfer is enabled or disabled by examining whether the data transfer satisfies conditions defined by the contents of an electronic watermark included in the data.

The means for determining may use an electronic watermark to determine whether a transfer is enabled or disabled for data which has been filtered on the basis of a source and a destination of the data.

According to a second aspect, the present invention provides a connection device for use with an information processing device for transferring transmission data from an information processing device to another information processing device. The connection device includes means for extracting electronic watermark information included the data, and means for determining whether a transfer of the data to the other information processing device is enabled or disabled by examining extracted information.

In the connection device, the means for determining whether a transfer of data is enabled or disabled may include a table having fields for storing a data source, a destination, and information for comparison with extracted electronic watermark information.

The connection device may permit particular users to correct the information for comparison with extracted electronic watermark information, stored in the table.

According to a third aspect, the present invention provides a computer readable storage medium including a function of extracting electronic watermark information from data transmitted from an information processing device, a function of determining whether or not a transfer of the data to another information processing device is enabled or disabled by examining extracted information, and a function of transferring the data to the other information processing device when the result of the determination indicates that the transfer is enabled, or blocking the data to the other information processing device when the result of the determination indicates that the transfer is disabled.

According to a fourth aspect, the present invention provides a method of processing a transfer of data having an electronic watermark, requested by an information processing device. The method includes the steps of executing a data transfer to an information processing device existing on a different network from a network on which the information processing device exists, and when certain data has not been transferred on the basis of electronic watermark information during the executed data transfer, displaying in the information processing device that the transfer of the certain data has failed.

According to a fifth aspect, the present invention provides a method of processing data having an electronic watermark transferred to an information processing device, wherein a transfer of the data is executed from an information processing device existing on a network different from a network on which the information processing device exists. The method includes the steps of determining whether or not certain data has not been transferred on the basis of electronic watermark information during the executed data transfer, and displaying in the information processing device that the transfer of the certain data has failed when determining that the certain data has not been transferred.

According to a sixth embodiment, the present invention provides a method of processing a transfer of data requested by an information processing device, which includes the steps of executing a transfer of the data to an information processing device existing on a network different from a network on which the information processing device exists, where the transferred data includes particular information indicative of a portion of the data, determining whether or not certain data has not been transferred on the basis of the particular information during the executed data transfer, and displaying in the information processing device that the transfer of the certain data has failed when determining that the certain data has not been transferred.

According to a seventh aspect, the present invention provides a method of processing data transferred to an information processing device, wherein a transfer of the data is executed from an information processing device existing on a network different from a network on which the information processing device exists, and the transferred data includes particular information indicative of a portion of the data. The method includes the steps of determining whether or not certain data has not been transferred on the basis of the particular information during the executed data transfer, and displaying in the information processing device that the transfer of the certain data has failed when determining that the certain data has not been transferred.

According to an eighth aspect, the present invention provides an information processing device for processing a request for a transfer of data having an electronic watermark, which includes means for executing a data transfer to an information processing device existing on a different network from a network on which the information processing device exists, and display means responsive to a determination indicating that certain data has not been transferred on the basis of electronic watermark information during the executed data transfer, for displaying in the information processing device that the transfer of the certain data has failed.

According to a ninth aspect, the present invention provides an information processing device for processing a request for a transfer of data, which includes means for executing a data transfer to an information processing device existing on a different network from a network on which the information processing device exists, where the transferred data includes particular information indicative of a portion of the data, and means responsive to a determination indicating that certain data has not been transferred on the basis of the particular information during the executed data transfer, for displaying in the information processing device that the transfer of the certain data has failed.

According to a tenth aspect, the present invention provides an information processing device for receiving data having an electronic watermark transferred thereto, where the data is transferred from an information processing device existing on a different network from a network on which the information processing device exists. The information processing device includes means for informing that certain data has not been transferred in the transferred data, and means for displaying in the information processing device that the transfer of the certain data has failed when the certain data has not been transferred in the transferred data.

According to the present invention, data on the internal network is embedded, as required, with information for identifying the data as an electronic watermark, such as information indicative of the copy right, confidentiality or the like of the data. For example, the filtering device based on electronic watermark information may be installed at a relay point between the internal network and the external network. The filtering device determines whether or not data may be transferred to the outside based on the presence or absence of an electronic watermark, or the type of the electronic watermark if present.

In the drawings:
Fig. 1 is a block diagram illustrating the configuration of a system according to an embodiment of the present invention;
Fig. 2 is a table showing examples of the contents stored in a storage means for determination in Fig. 1;
Fig. 3 is a flow chart illustrating a procedure performed when data is transmitted in the system of Fig. 1;
Fig. 4 is a block diagram illustrating the configuration of a system according to an embodiment in which a data transmission device is integrated with a filtering means using an electronic watermark;
Fig. 5 is a block diagram illustrating the configuration of a system according to an embodiment in which filtering is performed in a firewall and the filtering means using an electronic watermark in this order;
Fig. 6 is a flow chart illustrating a procedure performed when data is transmitted in the system of Fig. 5;
Fig. 7 is a block diagram illustrating the configuration of a system according to an embodiment in which the filtering is performed in the filtering means using an electronic watermark and the firewall in this order; and
Fig. 8 is a block diagram illustrating the configuration of a system according to an embodiment in which the filtering means using an electronic watermark is integrated with the firewall to construct an integrated filtering device.

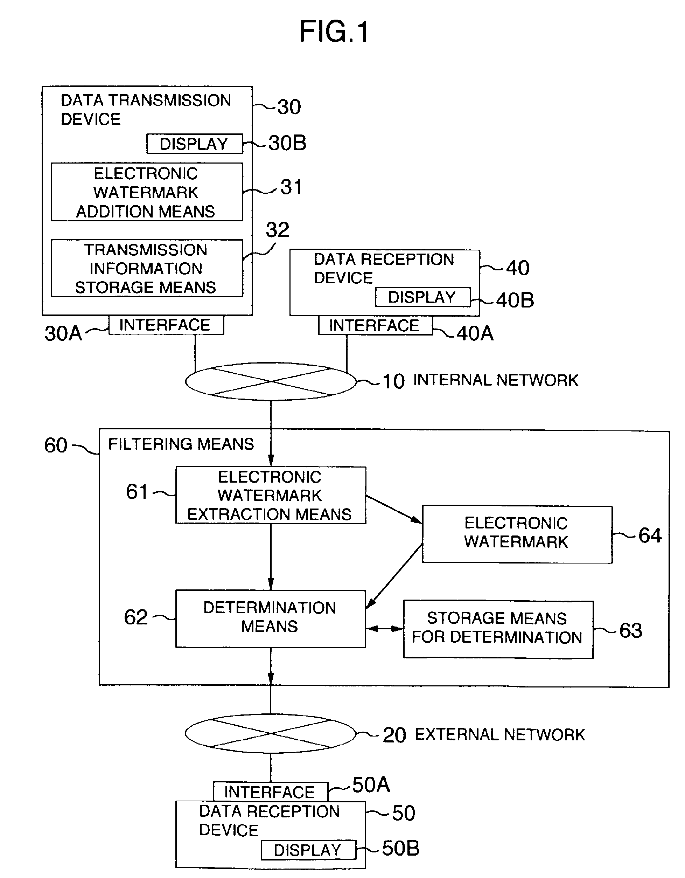

Fig. 1 is a block diagram illustrating the configuration of a system according to an embodiment of the present invention. The illustrated system includes an internal network 10 and an external network 20. The internal network 10 is a closed network for which the security need not be considered in transferring data therethrough. The external network 20 is an open network for which the security must therefore be considered in transmitting data therethrough. A data transmission device 30, i.e., a communication device on the transmission side, comprises an electronic watermark addition means 31 for adding an electronic watermark to data to be transmitted; and a storage means 32 for holding information to be transmitted, in which an electronic watermark is embedded. The data transmission device 30 has data to be transmitted to another information processing device, and adds electronic watermark information to the transmission data in accordance with rules defined for the data.

The electronic watermark information refers to information concealed in an invisible state, making use of redundancy of data, in multimedia data such as image data, audio data, text data or the like in which the electronic watermark is embedded. In some cases, embedded information may be visible. For embedding an image with an electronic watermark, there are several appropriate methods including, for example, a method of embedding electronic watermark information in data of each pixel, and a method of once converting an image into a spatial frequency information which is then embedded with electronic watermark information.

Data reception devices 40, 50 are devices for receiving data from the data transmission device 30. Devices 30, 40 and 40 respectively include a communication interface 30A and a display device 30B, a communication interface 40A and a display device 40B, and a communication interface 50A and a display device 50B, throughout the embodiments. The data reception device 40 is connected to the same internal network 10 as the data transmission device 30, so that it receives data from the data transmission device 30 through the internal network 10. The data reception device 50 is a device connected to a different network from that to which the data transmission device 30 is connected, so that it receives data from the data transmission device 30 through the external network 20, a filtering means 60 and the internal network 10. The filtering means 60 is installed on a line that connects the internal network 10 with the external network 20. The filtering means 60 comprises an electronic watermark extraction means 61, a determination means 62, and a storage means 63 for determination. The filtering means 60 extracts electronic watermark information 64 embedded in received data, utilizes the extracted electronic watermark information 64 to determine whether or not the data may be transferred to the external network 20, and transfers the data or error information to the data reception device 50 depending to the result of the determination. For example, the filtering means 60 may be provided in a server located in the internal network 10.

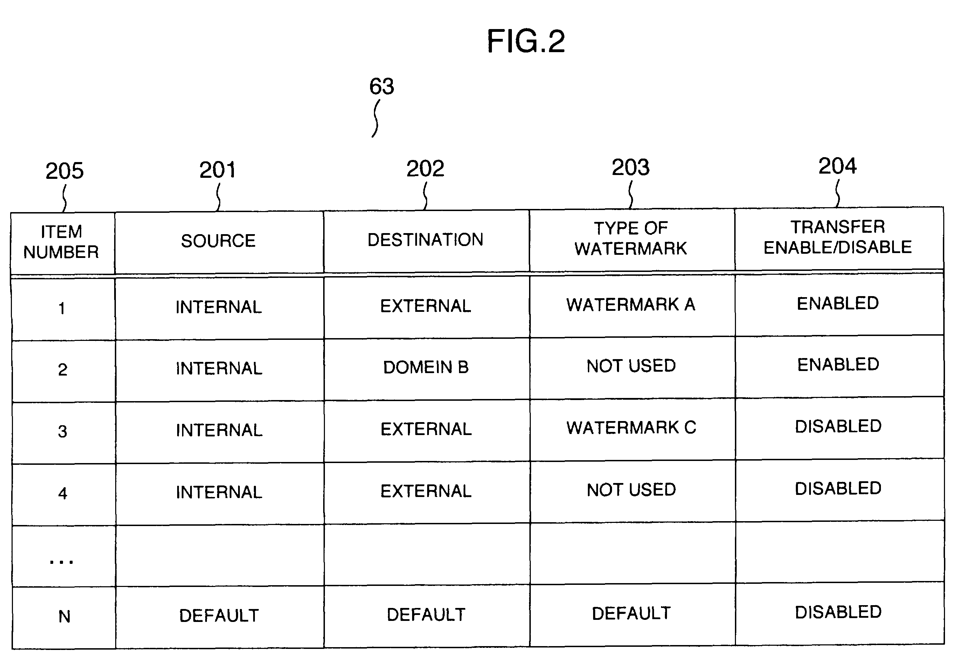

Fig. 2 shows an exemplary structure of the storage means 63 for determination which stores data used as external transfer conditions in the filtering means 60. Specifically, the storage means 63 for determination stores a data source 201; a data destination 202; a type of information 203 indicating which type of electronic watermark information is added; and a transfer enable/disable operation 204 indicating whether or not multimedia (moving image, still image, text, audio or the like) information embedded with an electronic watermark may be transferred, depending on the result of the determination. The data source 201 and the data destination 202 specify a source and a destination, respectively, by describing therein the internal network, the external network, or more specifically a domain name or a host name. When specified with a domain name, the data source 201 or the data destination 202 indicates a communication from or to a computer included in the domain. When specified with a host name, on the other hand, the data source 201 or the data destination 202 indicates a communication from or to a computer associated with the host name. The type of watermark 203 specifies the presence/absence of a watermark in data and the type of the watermark if present. The storage means 63 for determination also specifies default operations which are taken when any of the above conditions 201 - 204 remains blank. The storage means 63 for determination is used by appropriately setting the external transfer conditions in accordance with requirements of the user as to which information the user desires to transmit or for which information the user desires to reject transmission.

In Item Number 1 in Fig. 2, the conditions defined by Item Number 1 are satisfied when data is embedded with electronic watermark information such as "open to the outside of the company" as a watermark A, and when the source 201 and the destination 202 are internal and external, respectively, determined from the source address and the destination address of the data, and it is consequently determined the transfer is enabled as indicated in the transfer enable/disable 204.

Item Number 2 defines a rule which states that a transfer is enabled as indicated in the transfer enable/disable 204 when the source 201 is internal, the destination 202 is a domain B, and no electronic watermark information is present. In this event, the domain B means all transmissions to computers included in the domain B which may belong to the internal network or to the external network.

Item Number 3 defines a rule which states that a transfer is disabled as indicated in the transfer enable/disable 204 when the source 201 is internal, the destination 202 is external, and data is embedded, for example, with information indicative of "confidential external to the company" as a watermark C.

Item Number 4 defines a rule which states that a transfer is disabled as indicated in the transfer enable/disable 204 when the source 201 is internal, the destination 202 is external, and data is not embedded with electronic watermark information.

Item Number N specifies a default case, where a transfer is determined to be disabled by default when conditions in any of the above item numbers are satisfied.

It should be noted that only a limited number of persons such as an administrator may modify or update the contents of the storage means 63 for determination. For example, the administrator may rewrite the contents of the storage means 63 for determination by transmitting through an electronic mail, cgi, or the like information on the source 201, the destination 202, the type of information 203 embedded as an electronic watermark, and the transfer enable/disable 204 to the filtering means 60.

Alternatively, only a limited number of persons are permitted to log in the filtering means 60 such that a permitted person may rewrite the contents of the storage mans 63 for determination.

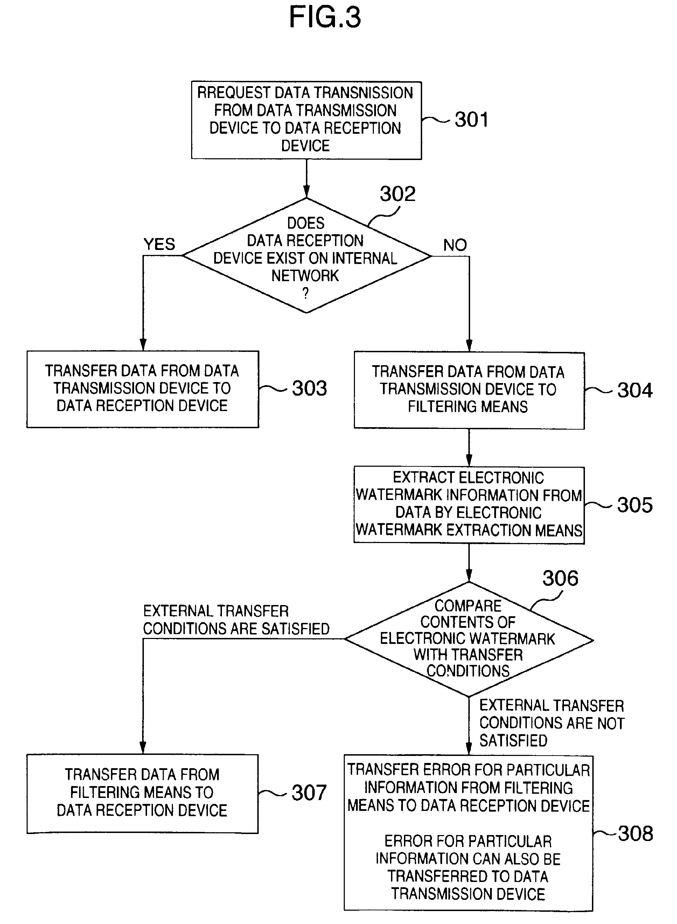

Fig. 3 is a flow chart illustrating a procedure for transmitting data. When a request for data reception is issued from a data reception device by reference to a Web page through HTTP or the like, or a request for data transmission is issued from a data transmission device 30 by transmitting a mail or the like, data is transferred from the data transmission device 30 to the data reception device (40 or 50) (step 301). When a transfer request is issued, it is first checked whether or not the data transmission device 30 and the data reception device (40 or 50) exist on the same network (step 302).

If they exist on the same internal network, the data transmission device 30 transfers data to the data reception device (40) on the same network (step 303). Conversely, if the data reception device (50) does not exist on the internal network, the data transmission device 30 transfers the data to the filtering means 60 connected to an external network (step 304). The filtering means 60 uses the electronic watermark extraction means 61 to acquire electronic watermark information possibly embedded in the received data (step 305) . The acquired data is compared with the contents of the storage means 63 for determination shown in Fig. 2 with respect to the source address, destination address, presence/absence of electronic watermark data, and soon (step 306) . With the storage means 63 for determination shown in Fig. 2, the transfer is enabled if the data is transferred from the internal network to the external network, and if the data is imprinted with "Watermark A" as electronic watermark information. The transfer of data from the internal network to the external network is rejected unless the electronic watermark is added to the data. As a result of the comparison, when the external transfer conditions are satisfied, the data is transferred to the data reception device 50 through the external network (step 307). If the transfer is disabled, error information is transferred to the data reception device 50 (step 308).

The transmitted error information may be directed to particular data in which an electronic watermark is embedded. For example, it is possible to detect from electronic watermark information that only a portion of pages within a plurality of pages composing document data is confidential to the outside of the company, and to inform the data reception device 50 or the data transmission device 30, as an error, that these pages have been filtered out. In addition, the error information may be transmitted together with information included in an electronic watermark, for example, information on external confidentiality (also including the degree of external confidentiality). In this way, the data transmission side can readily manage whether or not unauthorized information outflow has occurred.

Within the flow chart of Fig. 3, the steps up to the data transfer to the filtering means 60 (steps 301, 302, 303, 304) are performed in the data transmission device 30. The subsequent steps involved in the transfer from the filtering means 60 to the data reception device 50 (steps 305, 306, 307, 308) are performed in the filtering means 60.

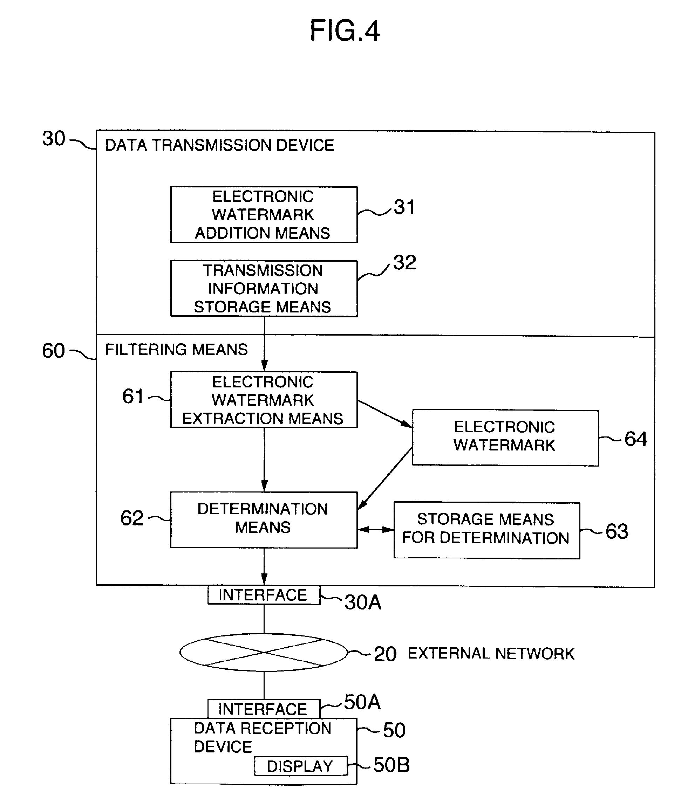

Fig. 4 is a block diagram illustrating the configuration of a system which has the filtering means 60 integrated with the data transmission device 30. In this case, the filtering means 60 and the data transmission device 30 may be provided in separation, or the filtering means 60 may be incorporated in the data transmission device 30. When integrated, data reception devices as indicated by 50 are placed in such a situation that all of them are located on the external network 20. Thus, data transferred from the transmission information storage means 32 is sent to the electronic watermark extraction means 61 to extract an electronic watermark from the data, and the determination means 62 determines based on the electronic watermark whether the transfer is enabled or disabled. With the configuration as mentioned, the determination as to whether a transfer is enabled or disabled can be made without fail in the filtering means 60, before data outflows to the external network 20, based on an electronic watermark embedded in the data.

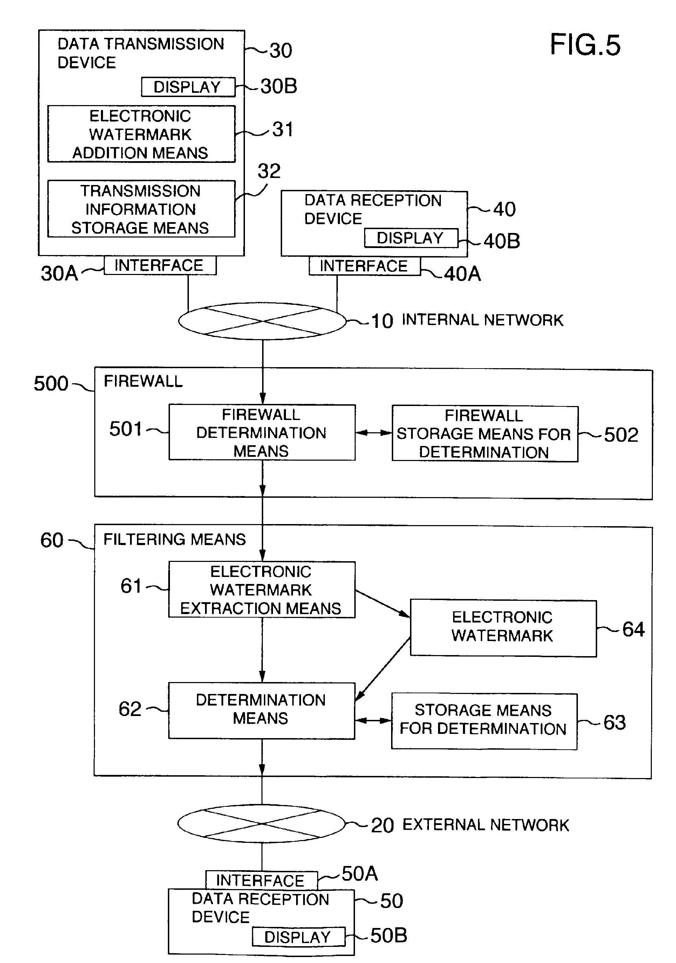

While the foregoing description has been made on the operation of the single filtering means which utilizes the electronic watermark information, the filtering means may be used in combination with a firewall. Fig. 5 illustrates the configuration of a system in which data is filtered on the basis of electronic watermark information after it has been enabled by a firewall for transmission. The firewall, designated by reference numeral 500, contains a determination means 501 and a storage means 502 for determination. Data transferred from a data transmission device 30 to an external data reception device 50 is first subjected to a determination as to its transfer is enabled or disabled by the firewall 500. At this time, the determination to enable or disable the transfer is made on the basis of the source address, destination address, transfer protocol, and so on of the data. Conventional firewall techniques can be used for the determination. When the transfer is enabled by the firewall 500, the data is further subjected to filtering based on an electronic watermark embedded therein.

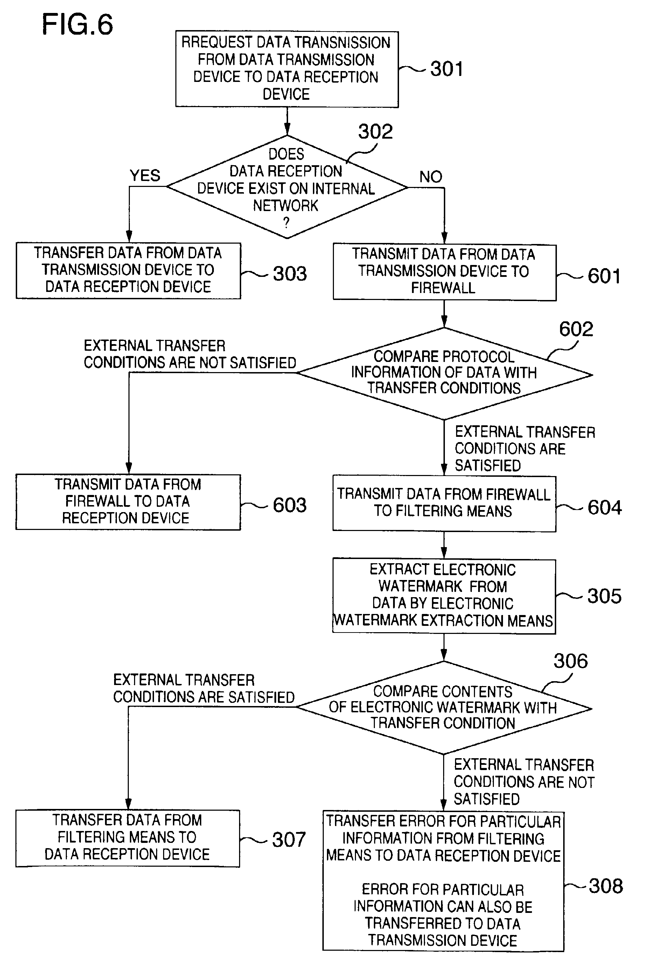

Fig. 6 is a flow chart illustrating a procedure for transmitting data when the system is configured as in Fig. 5. Instead of data transfer from the data transmission device 30 to the filtering means 60 in Fig. 3 (step 304), data is transmitted from the data transmission device 30 to the firewall 500, so that the data is transferred through the firewall 500 and the filtering means 60. When the result of a determination at step 302 indicates that a reception device exists on the internal network 10, the data is transmitted from the data transmission device 30 to the firewall 500 (step 601). The firewall 500 determines transfer conditions for the received data such as source and destination addresses, the type of protocol, and so on (step 602). If the transfer conditions are not satisfied, an error is transmitted to the data reception device (step 603). Conversely, when the transfer conditions are satisfied, the data is transferred from the firewall 500 to the filtering means 60 (step 604). The data transferred to the filtering means 60 is subjected to a determination as to whether its transfer is enabled or disabled, in a manner similar to the procedure in Fig. 3. These operations are performed in the firewall 500. Since the data inputted to the filtering means 60 has been screened through the firewall 500 for transmission, a burden on the filtering means 60 can be reduced, when a long time is taken to extract an electronic watermark in the filtering means 60, thus allowing for fast filtering.

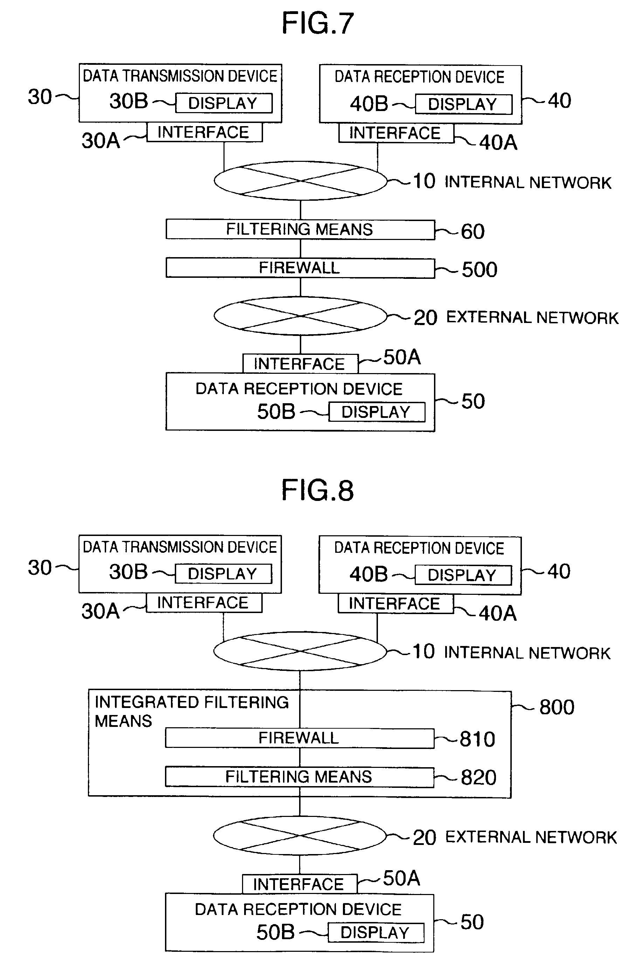

Alternatively, as illusrated in Fig. 7, the positions of the firewall 500 and the filtering means 60 may be changed with each other such that the filtering means 60 is located near the internal network 10, while the firewall 500 is located near the external network 20. With this positioning, it is possible to determine by the firewall 500 whether a transfer is enabled or disabled for data which has been permitted through filtering using an electronic watermark. This positioning is effective when data is filtered at its destination on the assumption that the data has certain electronic watermark information. Further alternatively, as illustrated in Fig. 8, a firewall 810 and a filtering means 820 using an electronic watermark may be equipped in a single device to form an integrated filtering means 800. In this event, each device serves as the firewall 810 and the filtering means 820 in a modular form. Such a combined use of the firewall and the filtering means can lead to improvements on a total filtering performance.

Here, a server may be used as the integrated filtering means 800.

The filtering means according to this embodiment can filter particular data or a portion of data in such a manner that a portion of data embedded with an electronic watermark is not open to the outside, or only particular data embedded with an electronic watermark is open to the outside.

Also, since the filtering means according to this embodiment can set determination conditions for each data on a server and does not perform address-based filtering, the filtering means can advantageously filter any data placed at any position on the internal network to enhance the data security.

Further, the use of the electronic watermark technique permits general users to reference data as it is without requiring means for decryption or the like. Furthermore, an invisible electronic watermark, when used, makes the user unconscious of the fact that data is embedded with conditions for determination.

As described above, the present invention provides for filtering of particular data in such a manner that data embedded with an electronic watermark is not open to the outside, or only data embedded with an electronic water mark is open to the outside.

## Claims

1. A filtering device (60) for connecting an internal network (10) with an external network (20), comprising:
means (62) operable when data is transferred between the networks for determining whether the data transfer is enabled or disabled by examining whether the data transfer satisfies conditions defined by the contents of an electronic watermark (64) included in the data.

2. A filtering device according to claim 1, wherein said means (62) for determining uses an electronic watermark (64) to determine whether a transfer is enabled or disabled for data which has been filtered on the basis of a source and a destination of the data.

3. A connection device (60) for use with an information processing device for transferring transmission data from an information processing device (30) to another information processing device (50), comprising:
means (61) for extracting electronic watermark information (64) included in said data; and
means (62) for determining whether a transfer of said data to the other information processing device is enabled or disabled by examining extracted information.

4. A connection device for use with an information processing device according to claim 3, wherein:
said means for determining whether a transfer of data is enabled or disabled includes a table (63) having fields for storing a data source (201), a destination (202), and information (203) for comparison with extracted electronic watermark information.

5. A connection device for use with an information processing device according to claim 4, wherein said connection device permits particular users to correct the information for comparison with extracted electronic watermark information, stored in said table.

6. A computer readable storage medium comprising:
a function of extracting electronic watermark information (64) from data transmitted from an information processing device (30);
a function of determining whether or not a transfer of said data to another information processing device (50) is enabled or disabled by examining extracted information; and
a function of transferring said data to the other information processing device when the result of the determination indicates that the transfer is enabled, or blocking said data to the other information processing device when the result of the determination indicates that the transfer is disabled.

7. A method of processing a transfer of data having an electronic watermark (64), requested by an information processing device (30), said method comprising the steps of:
executing a data transfer to an information processing device (50) existing on a different network (20) from a network (10) on which said information processing device (30) exists; and
when certain data has not been transferred on the basis of electronic watermark information during said executed data transfer, displaying in said information processing device that the transfer of the certain data has failed.

8. A method of processing data having an electronic watermark (64) transferred to an information processing device (50), wherein a transfer of said data is executed from an information processing device (30) existing on a network different (10) from a network (20) on which said information processing device exists, said method comprising the steps of:
determining whether or not certain data has not been transferred on the basis of electronic watermark information during the executed data transfer; and
displaying in said information processing device that the transfer of the certain data has failed when determining that the certain data has not been transferred.

9. A method of processing a transfer of data requested by an information processing device (30), said method comprising the steps of:
executing a transfer of the data to an information processing device (50) existing on a network (20) different from a network (10) on which said information processing device exists, said transferred data including particular information indicative of a portion of said data;
determining whether or not certain data has not been transferred on the basis of said particular information during the executed data transfer; and
displaying in said information processing device that the transfer of the certain data has failed when determining that the certain data has not been transferred.

10. A method of processing data transferred to an information processing device (50), wherein a transfer of said data is executed from an information processing device (30) existing on a network (10) different from a network (20) on which said information processing device exists, said transferred data including particular information indicative of a portion of said data, said method comprising the steps of:
determining whether or not certain data has not been transferred on the basis of said particular information during the executed data transfer; and
displaying in said information processing device that the transfer of the certain data has failed when determining that the certain data has not been transferred.

11. An information processing device (30) for processing a request for a transfer of data having an electronic watermark (64), comprising:
means (30A) for executing a data transfer to an information processing device (50) existing on a different network (20) from a network (10) on which said information processing device exists; and
display means (30B) responsive to a determination indicating that certain data has not been transferred on the basis of electronic watermark information during the executed data transfer, for displaying in said information processing device that the transfer of the certain data has failed.

12. An information processing device (30) for processing a request for a transfer of data, comprising:
means (30A) for executing a data transfer to an information processing device (50) existing on a different network (20) from a network (10) on which said information processing device (30) exists, said transferred data including particular information indicative of a portion of said data; and
means (30B) responsive to a determination indicating that certain data has not been transferred on the basis of said particular information during the executed data transfer, for displaying in said information processing device that the transfer of the certain data has failed.

13. An information processing device (50) for receiving data having an electronic watermark (64) transferred thereto, said data being transferred from an information processing device (30) existing on a different network (10) from a network (20) on which said information processing device exists, said information processing device comprising:
means (50A) for inputting information indicating that certain data has not been transferred in said transferred data; and
means (50B) for displaying in said information processing device that the transfer of the certain data has failed when the certain data has not been transferred in said transferred data.
